# EUROPEAN PATENT APPLICATION

(11) **EP 4 030 590 A1**
(43) Date of publication of application: **20.07.2022**
(21) Application number: 22151505.9
(22) Date of filing: 14.01.2022
(51) Int. Cl.: H02K 1/16, H02K 15/06

(54) **METHOD FOR MANUFACTURING ARMATURE, ARMATURE, AND IRON CORE**

(30) Priority: 18.01.2021 JP 2021005533
(71) Applicant: TOYOTA BOSHOKU KABUSHIKI KAISHA, Kariya-shi, Aichi 448-8651 (JP)
(72) Inventor: TAKEMOTO, Masaaki, Kariya-shi, 448-8651 (JP)
(74) Representative: TBK

(57) **Abstract**

A method for manufacturing an armature that includes an iron core (20) and a coil (30) is provided. The iron core (20) includes slots (21). The coil (30) is attached to the slots (21). Each of the slots (21) includes a constant portion (21A) and an expanded portion (21B) arranged outward in a radial direction from the constant portion (21A). The method includes an arranging step that arranges conductors (40) in a row across the constant portion (21A) and the expanded portion (21B) in each of the slots (21), The conductors (40) are included in the coil (30) and each have an outer surface covered by an insulating cover. The method also includes a first pressing step that uses a first press jig (60) to press and plastically deform the conductors (40) arranged in a row in each of the slots (21) in the arranging step. A width of the first press jig (60) is equal to a width of the constant portion (21A). In the first pressing step, the first press jig (60) is moved in a range of the constant portion (21A) of the slot (21) to plastically deform the conductors (40) arranged in a row.

## Description

### BACKGROUND

### 1. Field

The present disclosure relates to a method for manufacturing an armature. The present disclosure also relates to the armature and an iron core.

### 2. Description of Related Art

Japanese Laid-Open Patent Publication No. 2002-125338 discloses a method for manufacturing a stator that serves as an armature. The stator is part of an alternator. The stator includes an iron core and a stator coil. The iron core includes slots. The stator coil is attached to the slots of the iron core. In the method for manufacturing the stator disclosed in the literature, a conductor of the stator coil is bent and deformed into a predetermined shape in advance and part of the deformed conductor is arranged in each slot of the iron core. Then, the conductor is pressed in the slot so as to plastically deform the cross-sectional shape of the conductor. This reduces the gap between the conductor and the slot and thus increases the space factor of the stator coil in the slot.

Japanese Laid-Open Patent Publication No. 2015-082952 discloses a stator including an iron core in which slots are arranged. The iron core includes teeth spaced apart from each other at a constant interval in the circumferential direction. The side surfaces of the teeth on opposite sides in the circumferential direction are parallel to each other. Thus, the slots arranged between the teeth are shaped such that the width of each slot in the circumferential direction increases toward the outer side in the radial direction.

When the method for manufacturing the stator disclosed in Japanese Laid-Open Patent Publication No. 2002-125338 is applied to the stator disclosed in Japanese Laid-Open Patent Publication No. 2015-082952, the following problem would occur.

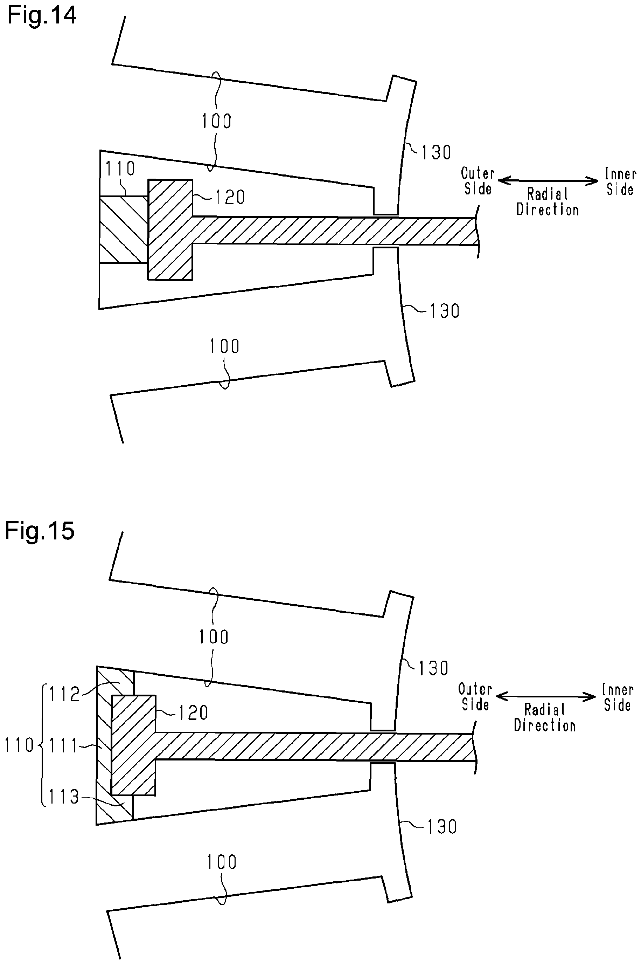

As shown in Fig. 14, when the width of a slot 100 in the circumferential direction increases toward the outer side in the radial direction, the width of a press jig 120 used to press a conductor 110 arranged in the slot 100 is made smaller than the width of the slot 100 in order to enable the press jig 120 to move.

Thus, as shown in Fig. 15, the press jig 120 plastically deforms the conductor 110 so as to bite into the conductor 110. As a result, the conductor 110 is shaped so as to have a C-shaped cross-section including a body 111, a first piece 112, and a second piece 113. The body 111 extends in the circumferential direction (the up-down direction in Fig. 15). The first piece 112 and the second piece 113 are shaped to protrude inward in the radial direction from opposite ends of the body 111.

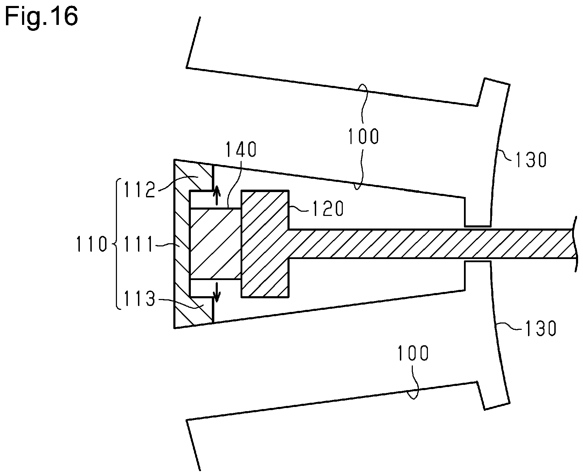

As shown in Fig. 16, in such a state, a new conductor 140 is arranged in the slot 100 and the press jig 120 is used to press the conductor 140. In this case, as shown by the arrows in Fig. 16, the newly-arranged conductor 140 plastically deforms so as to press the first piece 112 and the second piece 113 against side surfaces of teeth 130. This may cause an excessive compression force to act on the first piece 112 and the second piece 113 and break an insulating cover that covers the outer surface of the conductor 110. Such a problem is not disclosed in the above-described patent literature. Thus, there is room for improvement.

### SUMMARY

It is an object of the present disclosure to provide a method for manufacturing an armature, the armature, and an iron core capable of ensuring the insulation of a coil arranged in a slot shaped such that the width of the slot in a circumferential direction increases toward the outer side in a radial direction, while improving the space factor of the coil.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A method for manufacturing an armature that solves the above-described problem is provided. The armature includes an iron core and a coil. The iron core includes slots. The coil is attached to the slots. Each of the slots includes a constant portion and an expanded portion. The constant portion has a constant width in a circumferential direction. The expanded portion is arranged outward in a radial direction from the constant portion and shaped such that the width increases toward an outer side in the radial direction. The method includes an arranging step that arranges conductors in a row across the constant portion and the expanded portion in each of the slots. The conductors are included in the coil and each having an outer surface covered by an insulating cover. The method also includes a first pressing step that uses a first press jig to press and plastically deform the conductors arranged in a row in each of the slots in the arranging step. A width of the first press jig is equal to the width of the constant portion. In the first pressing step, the first press jig is moved in a range of the constant portion of the slot to plastically deform the conductors arranged in a row.

An armature that that solves the above-described problem is provided. The armature includes an iron core and a coil. The iron core includes slots. The coil is attached to the slots. Each of the slots includes a constant portion and an expanded portion. The constant portion has a constant width in a circumferential direction. The expanded portion is arranged outward in a radial direction from the constant portion and shaped such that the width increases toward an outer side in the radial direction. The coil includes arrangement portions respectively arranged in the slots and a coil end arranged outside of the slots. Each of the arrangement portions is formed by conductors. The conductors are included in the coil and each have an outer surface covered by an insulating cover. The conductors are arranged in a row across the constant portion and the expanded portion of a corresponding one of the slots. Adjacent ones of the conductors of the arrangement portions each include a contact surface. The contact surfaces of the adjacent conductors contact each other. Widths of the contact surfaces in the circumferential direction are equal to each other. Opposing surfaces of the conductors opposing an inner circumferential surface of a corresponding one of the slots are in close contact with the inner circumferential surface.

An iron core that solves the above-described problem is provided. The iron core includes an annular back yoke and teeth that protrude inward from the back yoke in a radial direction. The iron core includes slots each defined by side surfaces of the teeth in a circumferential direction and an inner circumferential surface portion of the back yoke. Each of the slots includes a constant portion and an expanded portion. The constant portion has a constant width in the circumferential direction. The expanded portion is arranged outward in the radial direction from the constant portion and shaped such that the width increases toward an outer side in the radial direction.

Other features and aspects will be apparent from the following detailed description, the drawings, and the claims.

### BRIEF DESCRIPTION OF DRAWINGS

Fig. 1 is a perspective view of a stator.
Fig. 2 is an enlarged cross-sectional view showing the structure of a part of the stator.
Fig. 3 is a perspective view showing a conductor that is attached to the stator core.
Fig. 4 is a cross-sectional view showing conductors that are arranged in a slot in a first arranging step.
Fig. 5 is a cross-sectional view showing a first press jig that is arranged in the slot.
Fig. 6 is a cross-sectional view showing the conductors that are plastically deformed using the first press jig.
Fig. 7 is a cross-sectional view showing conductors that are arranged in the slot in a second arranging step.
Fig. 8 is a cross-sectional view showing a second press jig that is arranged in the slot.
Fig. 9 is a cross-sectional view showing the conductors that are plastically deformed using the second press jig.
Fig. 10 is a plan view schematically showing the shape of the slot of the stator core.
Fig. 11 is a graph showing an example of the relationship between the boundary position and an output torque.
Fig. 12 is a plan view showing the shape of the slot of the stator core in a modification.
Fig. 13 is a plan view showing the shape of the slot of the stator core in another modification.
Fig. 14 is a plan view showing a conductor and a press jig that are arranged in a slot of a stator core in a stator having a conventional structure.
Fig. 15 is a cross-sectional view showing the conductors that are plastically deformed using the press jig of the conventional structure shown in Fig. 14.
Fig. 16 is a plan view showing a newly-arranged conductor that is pressed using the press jig of the conventional structure shown in Figs. 14 and 15.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

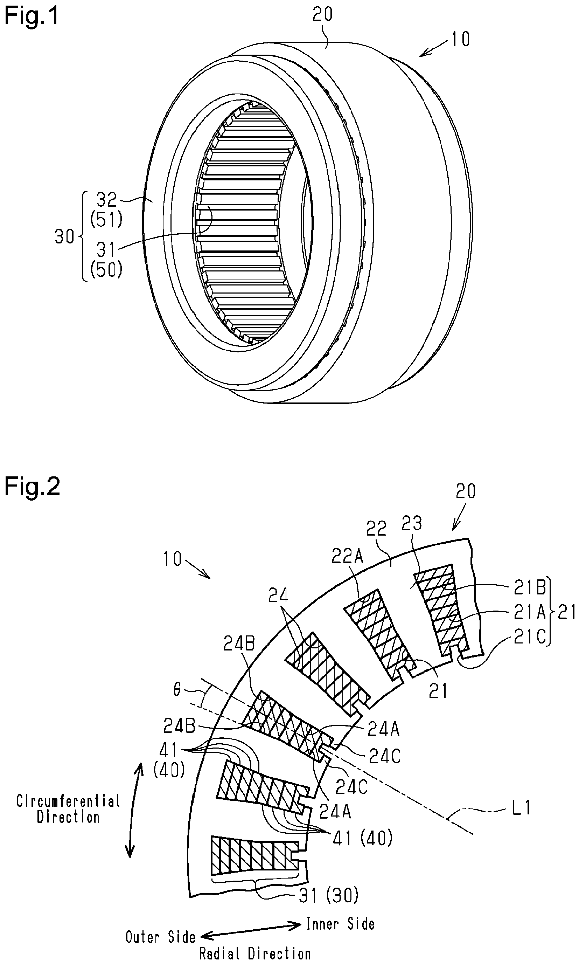

An armature and a method for manufacturing the armature according to an embodiment will now be described with reference to Figs. 1 to 13. In the present embodiment, a stator 10 will be described as an example of the armature.

As shown in Fig. 1, the stator 10 includes a stator core 20 serving as an iron core and a stator coil 30 attached to the stator core 20. The stator core 20 is substantially cylindrical. The stator core 20 is formed by stacking, for example, electrical steel sheets that are thin and annular.

As shown in Fig. 2, the stator core 20 includes slots 21. The slots 21 include a back yoke 22 and teeth 23. The back yoke 22 is annular. The teeth 23 each protrude inward from an inner circumferential surface portion 22A of the back yoke 22 in the radial direction of the stator core 20 (hereinafter simply referred to as the radial direction). The teeth 23 are spaced apart from each other in the circumferential direction. The inner circumferential surface portion 22A of the back yoke 22 and side surfaces 24 of the teeth 23 in the circumferential direction define the slots 21.

The side surfaces 24 of the teeth 23 in the circumferential direction each include a parallel portion 24A and an inclined portion 24B. The parallel portions 24A extend in the radial direction. More specifically, the parallel portions 24A of each tooth 23 extend along a first imaginary line L1 that passes through an intermediate portion of the adjacent teeth 23. The parallel portion 24A of each tooth 23 is parallel to the side surface 24 (more specifically, parallel portion 24A) of the opposing tooth 23. Thus, the distance between the opposing parallel portions 24A is constant. The parallel portions 24A of the side surfaces 24 define a constant portion 21A of the slot 21. That is, the constant portion 21A of the slot 21 has a constant width in the circumferential direction.

The inclined portions 24B are located outward from the parallel portions 24A in the radial direction. The inclined portion 24B of each tooth 23 is inclined with respect to the first imaginary line L1 such that the inclined portion 24B becomes farther from the side surface 24 (more specifically, inclined portion 24B) of the opposing tooth 23 toward the outer side in the radial direction. Thus, the distance between the opposing inclined portions 24B becomes longer toward the outer side in the radial direction. The inclined portions 24B of the side surfaces 24 of the teeth 23 and the inner circumferential surface portion 22A of the back yoke 22 define an expanded portion 21B of the slot 21. That is, the expanded portion 21B of the slot 21 is shaped such that the width in the circumferential direction increases toward the outer side in the radial direction.

Each tooth 23 includes an opening protrusion 24C. The opening protrusions 24C are located inward from the parallel portions 24A in the radial direction in the side surfaces 24. The opening protrusion 24C of each tooth 23 is shaped to protrude from the corresponding parallel portion 24A toward the opposing tooth 23. Thus, the distance between the opposing opening protrusions 24C is shorter than the distance between the opposing parallel portions 24A. The opening protrusions 24C of the side surfaces 24 define an opening 21C of the slot 21. That is, the opening 21C of the slot 21 has a smaller width in the circumferential direction than the constant portion 21A.

Thus, each slot 21 extends in the radial direction and includes the opening 21C, the constant portion 21A, and the expanded portion 21B in this order from the inner side in the radial direction.

As shown in Figs. 1 and 2, the stator coil 30 includes arrangement portions 31 respectively arranged in the slots 21 and a coil end 32 arranged outside of the slots 21. The stator coil 30 includes three stator coils 30 that correspond to a U-phase coil, a V-phase coil, and a W-phase coil. The configurations of the U-phase coil, the V-phase coil, and the W-phase coil are substantially the same. Thus, these coils will now be simply described as the stator coil 30 without being differentiated.

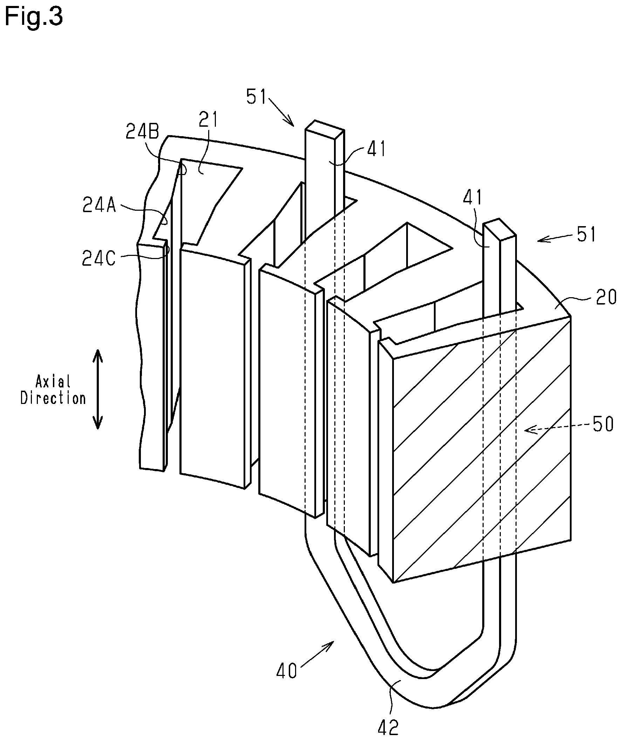

As shown in Fig. 3, the stator coil 30 includes a conductor 40. In the present embodiment, the conductor 40 is a square wire having a rectangular cross-section. The conductor 40 may be a square wire having a polygonal cross-section other than a rectangular cross-section or may be a round wire having a round cross-section. The conductor 40 is made of metal, such as aluminum. The outer surface of the conductor 40 is covered by an insulating cover. The conductor 40 includes two linear portions 41 that extend in parallel and a curved portion 42 that is extended and curved so as to connect the basal ends (lower ends in Fig. 3) of the linear portions 41. Each linear portion 41 is inserted through the corresponding slot 21 from the distal end (upper end in Fig. 3) of the linear portion 41 in the axial direction of the stator core 20 (hereinafter simply referred to as the axial direction). The basal end of the linear portion 41 is arranged in the slot 21. The distal end of the linear portion 41 is arranged outside of the slot 21. The conductor 40 includes an inner portion 50 arranged in the slot 21 and an outer portion 51 located outside of the slot 21. That is, the inner portion 50 is defined by the basal end of the linear portion 41, and the outer portion 51 is defined by the distal end of the linear portion 41 or by the curved portion 42.

As shown in Fig. 2, eight linear portions 41 of conductors 40 are arranged in each slot 21 in the radial direction. Two linear portions 41 of one conductor 40 are each inserted through a different slot 21. The conductors 40 are each attached to the stator core 20 and then shaped into a desired form through, for example, a pressing step and a bending step. Subsequently, the distal end of the linear portion 41 of one conductor 40 is joined to the distal end of the linear portion 41 of another conductor 40. As a result, the conductors 40 are continuous with each other so as to form the stator coil 30 wound around the stator core 20.

The method for manufacturing the stator 10 will now be described in detail. In the present embodiment, the conductors 40 are attached to the inside of each slot 21 by performing a first arranging step, a first pressing step, a second arranging step, and a second pressing step in this order.

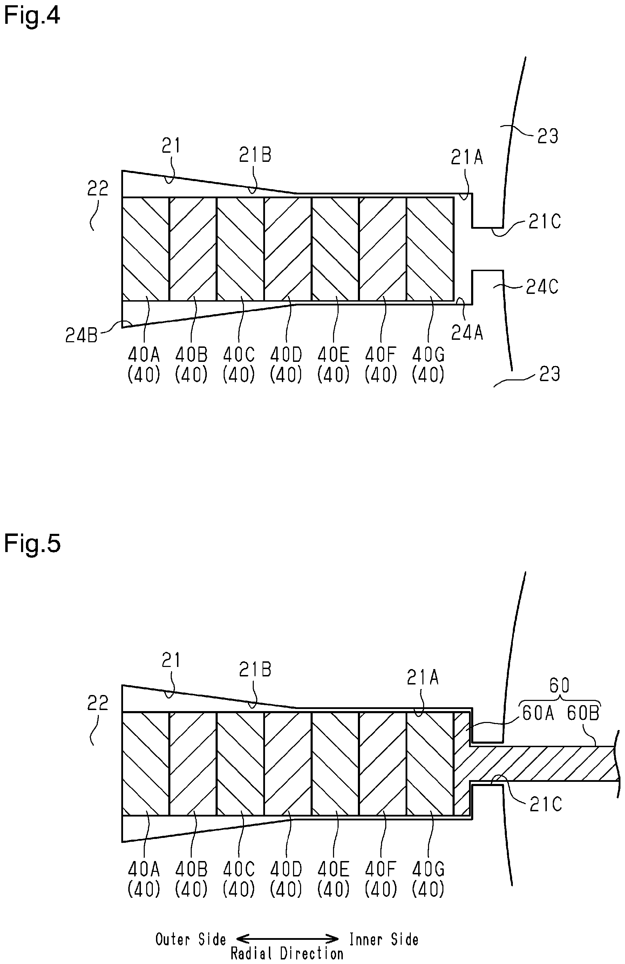

As shown in Fig. 4, in the first arranging step, conductors 40 are arranged in a row across the constant portion 21A and the expanded portion 21B of the slot 21. In the present embodiment, seven conductors 40 are arranged in the slot 21 from the side of the expanded portion 21B. The conductors 40 are hereinafter referred to as the first conductor 40A, the second conductor 40B, the third conductor 40C, the fourth conductor 40D, the fifth conductor 40E, the sixth conductor 40F, and the seventh conductor 40G in this order from the back yoke 22. The first conductor 40A to the third conductor 40C are arranged in the expanded portion 21B of the slot 21. The fourth conductor 40D is arranged in a section extending from the expanded portion 21B to the constant portion 21A of the slot 21. The fifth conductor 40E to the seventh conductor 40G are arranged in the constant portion 21A of the slot 21.

Then, as shown in Fig. 5, in the first pressing step, a first press jig 60 is arranged in the constant portion 21A of the slot 21. The first press jig 60 includes a pressing portion 60A and a driving portion 60B that is attached to the pressing portion 60A. The pressing portion 60A is arranged between the conductors 40 and the opening 21C in the constant portion 21A. The driving portion 60B extends inward in the radial direction through the opening 21C. The width of the pressing portion 60A in the circumferential direction is equal to the width of the constant portion 21A. The situation in which the width of the pressing portion 60A is equal to the width of the constant portion 21A does not only indicate a case in which the widths are completely equal to each other but also indicates a case in which the width of the pressing portion 60A is slightly smaller than the width of the constant portion 21A. In the latter case, a gap is created such that the pressing portion 60A can be attached to the inside of the constant portion 21A and the pressing portion 60A is movable in the radial direction in the constant portion 21A.

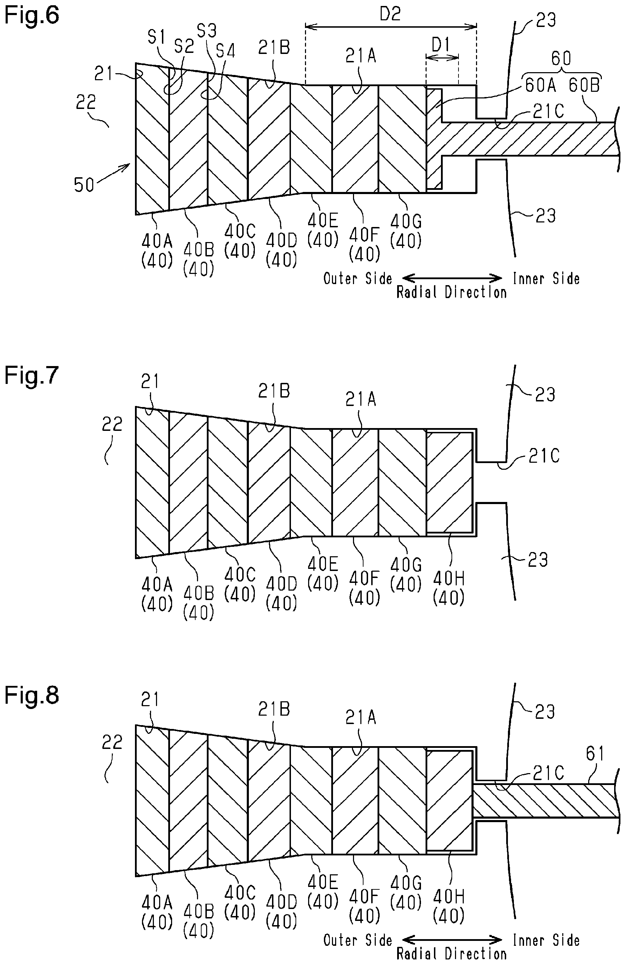

As shown in Fig. 6, in the first pressing step, after the first press jig 60 is arranged, the driving portion 60B is moved outward in the radial direction so that the pressing portion 60A presses the seventh conductor 40G outward in the radial direction. A movement distance D1 of the first press jig 60 is set in advance such that the pressing portion 60A falls within a range D2 of the constant portion 21A. The conductors 40 are pressed using the first press jig 60 toward the back yoke 22 so that the cross-sectional shapes of the inner portions 50 plastically deform in conformance with the shape of the slot 21. Each of the inner portions 50 is crushed so that the width of its cross-section becomes equal to the width of the slot 21. As a result, the inner portion 50 is deformed to the shape of a thin plate. The conductors 40 plastically deform in contact with each other. Thus, when the width of each conductor 40 increases to be equal to the width of the slot 21, contact surfaces of the conductors 40 deform uniformly. For example, a first contact surface S1 of the first conductor 40A in contact with the second conductor 40B deforms such that the width of the first contact surface S1 remains equal to the width of a second contact surface S2 of the second conductor 40B in contact with the first conductor 40A. Further, a third contact surface S3 of the second conductor 40B in contact with the third conductor 40C deforms such that the width of the third contact surface S3 remains equal to the width of a fourth contact surface S4 of the third conductor 40C in contact with the second conductor 40B. Thus, adjacent ones of the conductors 40 each include a contact surface, and the contact surfaces of the adjacent conductors 40 contact each other. Further, the widths of the contact surfaces in the circumferential direction are equal to each other. The term "equal" not only indicates a case in which the widths are completely equal to each other but also indicates a case in which the widths are slightly different from each other due to variations in the elastic deformation amount during pressing.

The first conductor 40A includes an opposing surface (the left surface in Fig. 6) opposing the back yoke 22, an opposing surface (the upper surface in Fig. 6) opposing one of the teeth 23 that are located on the opposite sides of the conductors 40, and an opposing surface (the lower surface in Fig. 6) opposing the other one of the teeth 23. After the conductors 40 are pressed in the first pressing step, these opposing surfaces are in close contact with the inner circumferential surface of the slot 21. Further, the remaining conductors 40 other than the first conductor 40A, namely, the second conductor 40B to the seventh conductor 40G respectively include opposing surfaces (the upper surfaces in Fig. 6) opposing one of the teeth 23 that are located on the opposite sides of the conductors 40 and opposing surfaces (the lower surfaces in Fig. 6) opposing the other one of the teeth 23, and these opposing surfaces are in close contact with the inner circumferential surface of the slot 21.

After the first pressing step is performed to plastically deform the first conductor 40A to the seventh conductor 40G in this manner, a second arranging step is performed.

As shown in Fig. 7, in the second arranging step, a new conductor 40 is arranged in a gap that is created in the slot 21 by plastically deforming the conductors 40 in the first pressing step. In the present embodiment, one conductor 40 is arranged as the new conductor 40. The newly-arranged conductor 40 is hereinafter referred to as the eighth conductor 40H. The eighth conductor 40H is arranged between the seventh conductor 40G and the opening 21C of the slot 21.

Then, as shown in Fig. 8, in the second pressing step, a second press jig 61 is arranged in the opening 21C of the slot 21. The width of the second press jig 61 in the circumferential direction is smaller than the width of the constant portion 21A and is equal to the width of the opening 21C. The situation in which the width of the second press jig 61 is equal to the width of the opening 21C of the slot 21 does not only indicate a case in which the widths are completely equal to each other but also indicates a case in which the width of the second press jig 61 is slightly smaller than the width of the opening 21C. In the latter case, a gap is created such that the second press jig 61 can be attached to the inside of the opening 21C and the second press jig 61 is movable in the radial direction in the opening 21C.

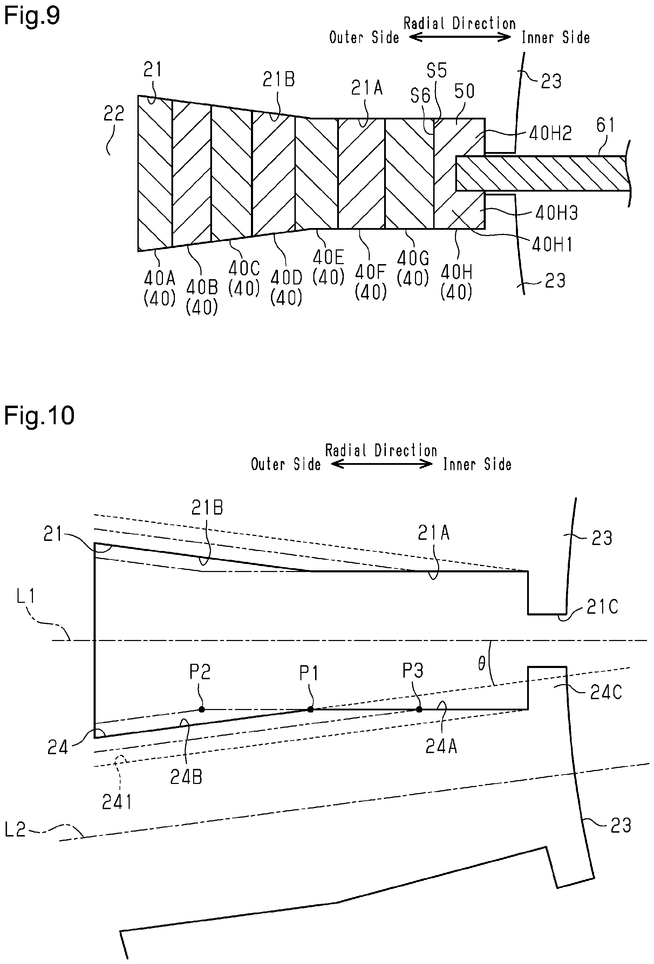

As shown in Fig. 9, in the second pressing step, the second press jig 61 is arranged and then moved outward in the radial direction so as to press the eighth conductor 40H outward in the radial direction. Since the first conductor 40A to the seventh conductor 40G that have already been plastically deformed in the first pressing step resist deforming due to strain hardening, the inner portion 50 of the newly-arranged eighth conductor 40H is plastically deformed. The inner portion 50 of the eighth conductor 40H is crushed so that the width of the cross-section of the inner portion 50 becomes equal to the width of the constant portion 21A. As a result, the inner portion 50 is deformed. Since the width of the second press jig 61 is smaller than the width of the constant portion 21A, the second press jig 61 plastically deforms the eighth conductor 40H so as to bite into the eighth conductor 40H. As a result, the cross-sectional shape of the eighth conductor 40H is plastically deformed so as to have a C-shape including a body 40H1, a first piece 40H2, and a second piece 40H3. The body 40H1 has the shape of a thin plate and extends in the circumferential direction. The first piece 40H2 and the second piece 40H3 are shaped to protrude inward in the radial direction from opposite ends of the body 40H1.

The seventh conductor 40G includes a fifth contact surface S5 in contact with the eighth conductor 40H, and the eighth conductor 40H includes a sixth contact surface S6 in contact with the seventh conductor 40G. After the eighth conductor 40H is pressed in the second pressing step, the fifth contact surface S5 has the same width as the sixth contact surface S6. Thus, the seventh conductor 40G and the eighth conductor 40H each include a contact surface, and the contact surfaces of the adjacent conductors 40 contact each other. Further, the widths of the contact surfaces in the circumferential direction are equal to each other. The eighth conductor 40H includes an opposing surface (the upper surface in Fig. 9) opposing one of the teeth 23 that are located on the opposite sides of the conductors 40 and an opposing surface (the lower surface in Fig. 9) opposing the other one of the teeth 23, and these opposing surfaces are in close contact with the inner circumferential surface of the slot 21.

After the conductors 40 are attached to the inside of the slots 21 by performing the first arranging step, the first pressing step, the second arranging step, and the second pressing step in this order in such a manner, a bending step is performed to curve the outer portions 51 of the conductors 40 in the radial direction and the circumferential direction. Subsequently, the linear portion 41 of each conductor 40 is joined to the linear portion 41 of another conductor 40. As a result, the stator coil 30 wound around the stator core 20 is formed with the conductors 40 continuous with each other.

As shown in Figs. 1 and 2, in the stator coil 30, the inner portions 50 of the conductors 40 form the arrangement portions 31 arranged in the slots 21, and the outer portions 51 of the conductors 40 form the coil end 32 arranged outside of the slots 21. As described above, the arrangement portion 31 is formed by the conductors 40 arranged in a row across the constant portion 21A and the expanded portion 21B of the slot 21. In the conductors 40 of the arrangement portion 31, adjacent ones of the conductors 40 each include a contact surface, and the contact surfaces of the adjacent conductors 40 contact each other. Further, the widths of the contact surfaces in the circumferential direction are equal to each other. The opposing surfaces of the conductors 40 opposing the inner circumferential surface of the slot 21 are in close contact with the inner circumferential surface.

A rotor including a permanent magnet is arranged on the inner circumferential side of the stator 10. This forms a rotating electric machine such as an electric motor or a power generator. When, for example, an electric motor is formed, the rotor is rotated by performing energization control for the stator coil 30 of the stator 10.

In the present embodiment, the shape of the slot 21 is set as follows.

As shown by the solid line in Fig. 10, the side surface 24 of each tooth 23 includes the parallel portion 24A, which extends along the first imaginary line L1, and the inclined portion 24B, which extends with an inclination with respect to the first imaginary line L1. The inclined portion 24B of each tooth 23 has an inclination angle θ with respect to the first imaginary line L1. The inclination angle θ is set to an angle at which the inclined portion 24B is parallel to a second imaginary line L2 extending through the center of the tooth 23 in the radial direction. As shown by the broken line in Fig. 10, the second imaginary line L2 is parallel to a side surface 241 in a case where the two side surfaces 24 of the tooth 23 are parallel to each other (that is, in a case where the tooth 23 is a parallel tooth). In the present embodiment, the boundary between the parallel portion 24A and the inclined portion 24B, that is, a boundary position P1 between the constant portion 21A and the expanded portion 21B of the slot 21 is located around the middle of the slot 21 in the radial direction.

In Fig. 10, the alternate long and short dashed line shows a first comparative example. The parallel portion 24A of the first comparative example is set to be longer than that of the present embodiment to extend to the outer side in the radial direction. That is, a boundary position P2 between the constant portion 21A and the expanded portion 21B of the slot 21 of the first comparative example is located outward in the radial direction from the boundary position P1 of the present embodiment. The inclined portion 24B of the first comparative example extends in parallel to the second imaginary line L2.

In Fig. 10, the long dashed double-short dashed line shows a second comparative example. The parallel portion 24A of the second comparative example is set to be shorter than that of the present embodiment. That is, a boundary position P3 between the constant portion 21A and the expanded portion 21B of the slot 21 of the second comparative example is located inward in the radial direction from the boundary position P1 of the present embodiment. The inclined portion 24B of the second comparative example extends in parallel to the second imaginary line L2.

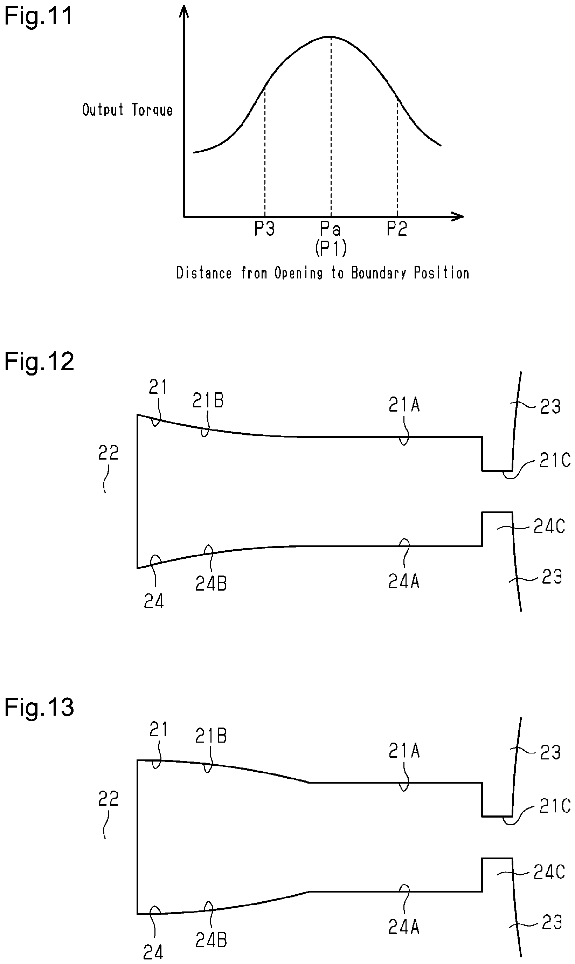

When the boundary position between the constant portion 21A and the expanded portion 21B of the slot 21 is changed with the inclination angle θ of the inclined portion 24B maintained in this manner, changes occur in the output torque in the case of using the stator 10 for an electric motor. The changes are shown in Fig. 11.

More specifically, in a case where the boundary position is located inward in the radial direction and close to the opening 21C as in the second comparative example, the expanded portion 21B of the slot 21 has an increased volume and thus the space factor of the expanded portion 21B improves. However, the width of the tooth 23 is narrow and thus the output torque is small. From this state, when the boundary position is moved outward in the radial direction, that is, when the distance between the boundary position and the opening 21C is lengthened, the improvement effect of the output torque resulting from an increase in the width of the tooth 23 is greater than the reduction effect of the output torque resulting from a decrease in the space factor. Thus, the output torque increases. In contrast, when the boundary position is moved outward in the radial direction from a predetermined position Pa (e.g., moved to the boundary position P2 in the first comparative example), the improvement effect of the output torque resulting from an increase in the width of the tooth 23 is lower than the reduction effect of the output torque resulting from a decrease in the space factor. Thus, the output torque decreases. This indicates that the output torque tends to become the maximum when the boundary position is located at the predetermined position Pa and the output torque tends to become lower as the boundary position becomes farther from the predetermined position Pa. In the present embodiment, the length of the parallel portion 24A is obtained and set in advance such that the boundary position P1 is located at the predetermined position Pa where the output torque is the maximum.

The operation and advantages of the present embodiment will now be described.
(1) In the present embodiment, the slots 21 formed in the stator core 20 each include the constant portion 21A and the expanded portion 21B. The constant portion 21A has a constant width in the circumferential direction. The expanded portion 21B is located outward in the radial direction from the constant portion 21A and is shaped such that the width increases toward the outer side in the radial direction. The conductors 40 are included in the stator coil 30, and the outer surface of each conductor 40 is covered by an insulating cover. The first arranging step is performed to arrange the conductors 40 in a row across the constant portion 21A and the expanded portion 21B in the slot 21. Then, the first pressing step is performed to press and plastically deform the conductors 40, which are arranged in the first arranging step, using the first press jig 60 having the same width as the constant portion 21A. In the first pressing step, the first press jig 60 is moved in the range of the constant portion 21A of the slot 21 to plastically deform the conductors 40 arranged in a row.

The first press jig 60 moves in the range of the constant portion 21A and has the same width as the constant portion 21A. This limits situations in which the first press jig 60 bites into the conductor 40 pressed in the constant portion 21A. In the expanded portion 21B, the conductors 40 plastically deform in contact with each other. Thus, when the width of each conductor 40 increases to be equal to the width of the slot 21, the contact surfaces of the conductors 40 deform uniformly. This keeps the widths of the contact surfaces of the conductors 40 equal to each other during the plastic deformation and limits situations in which one conductor 40 bites into another conductor 40. Thus, situations are limited in which a conductor 40 is bit into by another conductor 40 or the first press jig 60. This prevents an excessive compression force from acting on part of the conductors 40. Accordingly, even if the conductors 40 are plastically deformed so as to closely contact the inner circumferential surface of the slot 21, the insulating covers on the outer surfaces of the conductors 40 are prevented from breaking. In addition, the conductors 40 are in contact with the inner circumferential surface of the slot 21. This ensures the insulation of the stator coil 30 arranged in the slot 21 shaped such that the width of the slot 21 in the circumferential direction increases toward the outer side, while improving the space factor of the stator coil 30.

(2) The present embodiment further includes the second arranging step and the second pressing step. In the second arranging step, a new conductor 40 is arranged in the constant portion 21A of the slot 21 after the first pressing step is performed. In the second pressing step, the second press jig 61, which has a smaller width than the constant portion 21A, is used to press and plastically deform the conductor 40 arranged in the second arranging step. In the second pressing step, the eighth conductor 40H, which is located at the innermost position of the radial direction in the constant portion 21A, is pressed outward in the radial direction using the second press jig 61. This causes the cross-sectional shape of the eighth conductor 40H to be plastically deformed to a C-shape.

In the second pressing step, when the eighth conductor 40H, which is located at the innermost position of the radial direction in the constant portion 21A, is shaped to have a C-shape cross-section, the eighth conductor 40H has a shape recessed outward in the radial direction as compared with a structure in which the eighth conductor 40H is shaped to have a rectangular cross-section instead of being shaped into a C-shaped cross-section. Thus, when a rotor is attached to the inner circumferential side of the stator 10 to form a rotating electric machine, the distance between the permanent magnet of the rotor and the eighth conductor 40H is lengthened. This reduces eddy currents in the eighth conductor 40H that occur due to the rotation of the rotor. Accordingly, forming a rotating electric machine through the use of such a stator 10 contributes to reducing eddy-current losses in the rotating electric machine.

(3) In the present embodiment, the shape of the slot 21 is set such that the boundary position P1 between the constant portion 21A and the expanded portion 21B of the slot 21 is located at the same position as the predetermined position Pa where the output torque is the maximum. This contributes to increasing the torque in the rotating electric machine and contributes to reducing the rotating electric machine in size.

The present embodiment may be modified as follows. The present embodiment and the following modifications can be combined as long as they remain technically consistent with each other.

In the above-described embodiment, eight conductors 40 are attached to the inside of each slot 21. The number of the conductors 40 may be changed. Further, the number of arranging conductors 40 in the first arranging step is not limited to seven and may be changed as long as the conductors 40 can be arranged in a row across the constant portion 21A and the expanded portion 21B in the slot 21. Even in such a structure, the first pressing step allows the conductors 40 arranged in the expanded portion 21B of the slot 21 to be deformed in conformance with the shape of the expanded portion 21B while ensuring the insulation of the stator coil 30. Furthermore, the number of arranging conductors 40 in the second arranging step is not limited to one and may be two or more as long as the conductors 40 can be arranged in the constant portion 21A of the slot 21. Even in such a structure, the conductor 40 located at the innermost position of the radial direction can be deformed to have a C-shaped cross-section by pressing the conductor 40 using the second press jig 61.

In the second pressing step, the eighth conductor 40H is plastically deformed so as to have a C-shaped cross-section. Such a structure may be omitted. For example, the eighth conductor 40H may be plastically deformed so as to have a rectangular cross-section. Such a structure may be obtained by arranging and pressing a press jig that has the same width as the constant portion 21A between the eighth conductor 40H and the opening 21C.

In the above-described embodiment, the opening protrusions 24C are arranged on the side surfaces 24 of the teeth 23, and the opening 21C having a smaller width than the constant portion 21A is arranged in the slot 21. Instead, a structure in which the opening protrusions 24C are not arranged on the side surfaces 24 of the teeth 23 may be employed.

In the above-described embodiment, the boundary position P1 between the constant portion 21A and the expanded portion 21B of the slot 21 is set so as to be located at the same position as the predetermined position Pa where the output torque is the maximum. The boundary position P1 does not have to be set in this manner. For example, the boundary position P1 may be set to a position that is different from the predetermined position Pa, such as the boundary position P2 of the first comparative example or the boundary position P3 of the second comparative example. Thus, the stator core 20 includes stator cores having the slots 21 shaped as illustrated in the first comparative example and the second comparative example. That is, even in the case of using the stator core 20 having the slots 21 shaped as illustrated in the first comparative example and the second comparative example, the same operation and advantage as (1) are obtained.

In the above-described embodiment, the inclination angle θ of the inclined portion 24B is set to be parallel to the second imaginary line L2. Instead, the inclination angle θ of the inclined portion 24B may be inclined with respect to the second imaginary line L2. Even in such a structure, when the expanded portion 21B is located outward in the radial direction from the constant portion 21A and is shaped such that the width increases toward the outer side in the radial direction, the same operation and advantage as (1) are obtained. Additionally, the inclined portions 24B do not have to be straight in plan view. For example, as shown in Fig. 12, one inclined portion 24B may be shaped to have a curved line that protrudes inward such that the inclined portion 24B becomes farther from the opposing inclined portion 24B toward the outer side in the radial direction. Instead, as shown in Fig. 13, one inclined portion 24B may be shaped to have a curved line that protrudes outward such that the distance from the opposing inclined portion 24B becomes smaller toward the outer side in the radial direction.

The stator 10 including the stator core 20 and the stator coil 30 is described as an example of the armature. The armature is not limited to the stator 10. For example, the armature may be a rotor that includes a rotor core with slots 21 and a rotor coil attached to the slots 21 of the rotor core, and the armature may have the same structure as the above-described embodiment.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

A method for manufacturing an armature that includes an iron core (20) and a coil (30) is provided. The iron core (20) includes slots (21). The coil (30) is attached to the slots (21). Each of the slots (21) includes a constant portion (21A) and an expanded portion (21B) arranged outward in a radial direction from the constant portion (21A). The method includes an arranging step that arranges conductors (40) in a row across the constant portion (21A) and the expanded portion (21B) in each of the slots (21), The conductors (40) are included in the coil (30) and each have an outer surface covered by an insulating cover. The method also includes a first pressing step that uses a first press jig (60) to press and plastically deform the conductors (40) arranged in a row in each of the slots (21) in the arranging step. A width of the first press jig (60) is equal to a width of the constant portion (21A). In the first pressing step, the first press jig (60) is moved in a range of the constant portion (21A) of the slot (21) to plastically deform the conductors (40) arranged in a row.

## Claims

1. A method for manufacturing an armature that includes an iron core (20) and a coil (30), the iron core (20) including slots (21), and the coil (30) being attached to the slots (21), wherein
each of the slots (21) includes a constant portion (21A) and an expanded portion (21B), the constant portion (21A) having a constant width in a circumferential direction, and the expanded portion (21B) being arranged outward in a radial direction from the constant portion (21A) and shaped such that the width increases toward an outer side in the radial direction,
the method comprises:
an arranging step that arranges conductors (40) in a row across the constant portion (21A) and the expanded portion (21B) in each of the slots (21), the conductors (40) being included in the coil (30) and each having an outer surface covered by an insulating cover; and
a first pressing step that uses a first press jig (60) to press and plastically deform the conductors (40) arranged in a row in each of the slots (21) in the arranging step, a width of the first press jig (60) being equal to the width of the constant portion (21A), and
in the first pressing step, the first press jig (60) is moved in a range of the constant portion (21A) of the slot (21) to plastically deform the conductors (40) arranged in a row.

2. The method for manufacturing the armature according to claim 1, wherein the arranging step includes:
a first arranging step that arranges, in a row across the constant portion (21A) and the expanded portion (21B) of the slot (21), the conductors (40) that are to be pressed in the first pressing step; and
a second arranging step that arranges a new conductor (40) in the constant portion (21A) of the slot (21) after performing the first pressing step,
the method further comprises a second pressing step that uses a second press jig (61) to press and plastically deform the conductor (40) arranged in the second arranging step, a width of the second press jig (61) being smaller than the width of the constant portion (21A), and
in the second pressing step, one of the conductors (40) that is located at an innermost position of the radial direction in the constant portion (21A) of each of the slots (21) is pressed outward in the radial direction using the second press jig (61) so that the conductor (40) is plastically deformed to have a C-shaped cross-section.

3. An armature comprising:
an iron core (20) including slots (21); and
a coil (30) attached to the slots (21), wherein
each of the slots (21) includes a constant portion (21A) and an expanded portion (21B), the constant portion (21A) having a constant width in a circumferential direction, and the expanded portion (21B) being arranged outward in a radial direction from the constant portion (21A) and shaped such that the width increases toward an outer side in the radial direction,
the coil (30) includes arrangement portions (31) respectively arranged in the slots (21) and a coil end (32) arranged outside of the slots (21),
each of the arrangement portions (31) is formed by conductors (40), the conductors (40) being included in the coil (30) and each having an outer surface covered by an insulating cover, and the conductors (40) being arranged in a row across the constant portion (21A) and the expanded portion (21B) of a corresponding one of the slots (21),
adjacent ones of the conductors (40) of the arrangement portions (31) each include a contact surface, the contact surfaces of the adjacent conductors (40) contacting each other, and widths of the contact surfaces in the circumferential direction being equal to each other, and
opposing surfaces of the conductors (40) opposing an inner circumferential surface of a corresponding one of the slots (21) are in close contact with the inner circumferential surface.

4. An iron core, comprising:
an annular back yoke (22); and
teeth (23) that protrude inward from the back yoke (22) in a radial direction, wherein
the iron core includes slots (21) each defined by side surfaces (24) of the teeth (23) in a circumferential direction and an inner circumferential surface portion (22A) of the back yoke (22), and
each of the slots (21) includes a constant portion (21A) and an expanded portion (21B), the constant portion (21A) having a constant width in the circumferential direction, and the expanded portion (21B) being arranged outward in the radial direction from the constant portion (21A) and shaped such that the width increases toward an outer side in the radial direction.
